# NEW EUROPEAN PATENT SPECIFICATION

(11) **EP 0 472 247 B2**
(45) Date of publication and mention of the opposition decision: **19.05.1999**
(45) Mention of the grant of the patent: 17.11.1994
(21) Application number: 91202679.6
(22) Date of filing: 20.09.1989
(51) Int. Cl.: A01J 5/017, A01J 7/00, G01S 15/88

(54) **An implement for automatically milking an animal**
Vorrichtung zum Melken eines Tieres
Dispositif de traite d'un animal

(30) Priority: 21.09.1988 NL 8802332
(43) Date of publication of application: 26.02.1992
(62) Divisional of application: 89202372.2
(73) Proprietor: MAASLAND N.V., 3155 PD Maasland (NL)
(72) Inventor: van der Lely, Edwin, NL-3155 PD Maasland (NL); van den Berg, Karel, NL-2971 BR Bleskensgraaf (NL)
(74) Representative: Corten, Maurice Jean F.M.

(56) References cited:
- EP-A- 0 069 560
- EP-A- 0 091 892
- EP-A- 0 213 660
- EP-A- 0 232 568
- EP-A- 0 258 938
- EP-A- 0 300 115
- EP-A- 0 300 582
- EP-A- 0 302 559
- EP-A- 0 323 875
- US-A- 4 010 714

## Description

The present invention relates to an implement for automatically milking animals, such as cows, comprising a milking robot with a robot arm, a carrying element formed by said robot arm and being able to carry teat cups to be connected to the teats of an animal, coupling means being arranged on said robot arm, said coupling means including a single teat cup engagement member adapted to engage each of said teat cups individually, whereby the coupling means is adapted to engage and move said teat cups upwardly one after another relative to the robot arm.

Such an implement is known from EP-A1-0213660, particularly from the embodiment shown in Figures 1 - 3. In that embodiment the teat cups are arranged beside the milking parlour The teat cups are separately engaged by coupling means mounted on a robot arm; hence the carrying element formed by the robot arm is able to carry only one teat cup. The teat cups are successively engaged and moved upwardly to connect them to the respective teats. The disadvantage of this implement is a rather time-consuming way of coupling the teat cups to the teats.

The invention has for its object to provide an implement as defined in the opening paragraph, wherein the coupling of the teat cups to the teats of the animal's udder is realized in a comparatively simple, accurate and fast manner.

According to the invention, the implement of the above-defined type is characterized in that the carrying element is adapted to accomodate all the teat cups simultaneously in the immediate vicinity of the coupling means. In a specific embodiment, the coupling means include an electromagnet, while a teat cup is engaged by energizing the electromagnet. Particularly, the electromagnet remains energized until a vacuum in the relevant teat cup is established, said vacuum establishment being an indication that the teat cup is connected to the relevant teat.

In a preferred embodiment, the teat cups can be kept in position on the robot arm by flexible connecting members coupled to cylinders, each of which permits a relevant teat cup to be moved upwardly after being engaged by the electromagnet and pulls down said teat cup after the milk supply in said teat cup has been stopped.

According to the invention, the coupling means include an outer jacket to which the electromagnet is fitted, as well as a substantially vertical inner jacket which is connected to the robot arm, whereby it is possible for the outer jacket with the electromagnet to be moved in the upward direction. Furthermore, pivotal means can be provided on the robot arm, while, with the aid of said pivotal means, the coupling means can be brought into angular positions wherein the teat cups can be enganged. These pivotal means can be constituted by a pivotal mechanism provided on the lower part of the coupling means and a cylinder connected between the pivotal mechanism and the robot arm to control the pivotal mechanism.

In a favourable embodiment, the coupling means can be arranged on a member, movably relative to the robot arm, in order to bring the coupling means in two possible positions relative to the teat cups carried on the robot arm, so that in each position the coupling means can be brought into two angular positions wherein respective teat cups can be engaged. This movable member can be adjusted to a first position in which the coupling means can engage the respective teat cups to be connected to the rear teats in angular positions determined by the pivotal means and to a second position in which the coupling means can engage the respective teat cups to be connected to the front teats in said angular positions. Thereby the coupling means can be moved reciprocally through a pivotal angle of approximately 90°.

For a better understanding of the present invention and to show how the same may be carried into effect, reference will now be made, by way of example, to the accompanying drawings, in which:
Figure 1 is a side view of a robot arm arranged at the side of a milking parlour;
Figure 2 is a plan view of the robot arm;
Figure 3 is a side view of part of the robot arm as shown in Figure 2;
Figure 4 is a plan view of the end of the robot arm;
Figure 5 is a side view of the robot arm end as shown in Figure 4;
Figure 6 is a partial cross-sectional view taken on the line VI-VI in Figure 4;
Figure 7 shows a laser arrangement with associated electric and electronic elements;
Figure 8 shows a diagram in illustration of the position of the teats relative to the parameters describing the laser;
Figure 9 shows a block diagram of a circuit for controlling the connection of the teat cups to the teats of an animal's udder;
Figure 10 shows a flow diagram of the teat searching procedure effected in the microprocessor constituting part: of the circuit shown in Figure 9, and

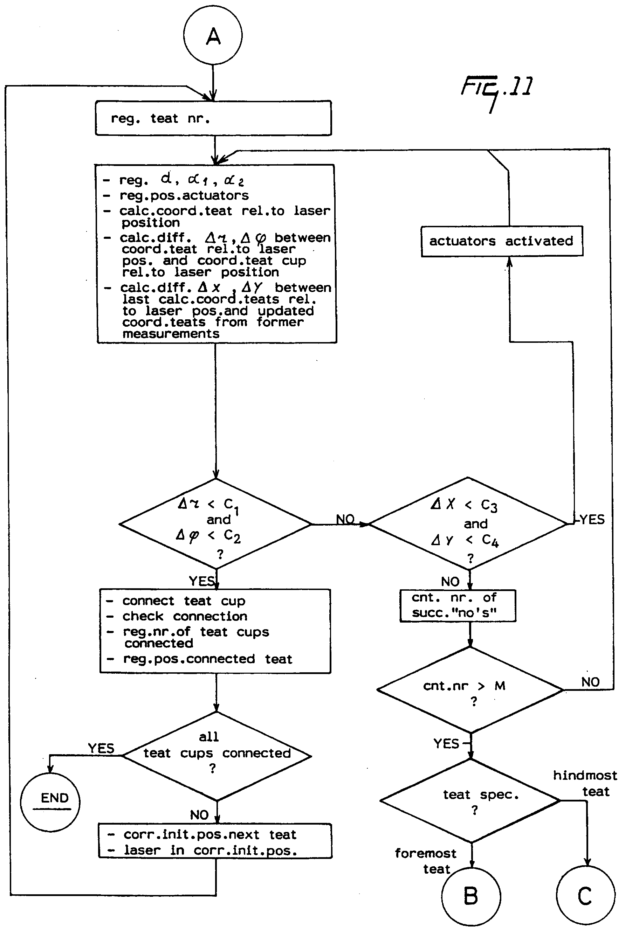

Figure 11 shows a flow diagram of the teat tracking procedure effected in the microprocessor constituting part of the circuit shown in Figure 9.

In the drawings, corresponding components have been denoted by the same reference numerals. In addition, the invention is not limited to the embodiment as shown and described here, which embodiment only serves to illustrate the inventive idea.

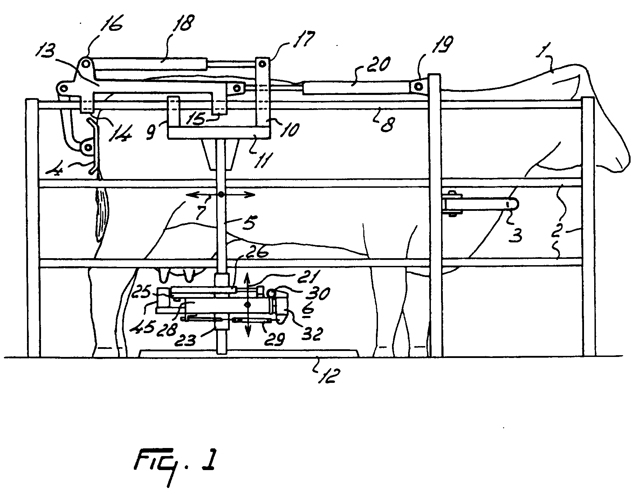

In Figures 1 and 2, the robot arm according to the invention is shown; this robot arm is arranged at the side of a milking parlour. Once an animal to be milked has arrived in the milking parlour and has been positioned appropriately therein, the robot arm is moved, on the basis of animal recognition data, from the front side to under the animal's udder.

In the side view of the implement of Figure 1 there is shown an animal 1 which is present in the milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundary for the animal 1 in the forward direction. By providing the front side of the milking parlour with e.g. a feed unit, the animal will advance sufficiently far, i.e. until against the stop 3.

The milking parlour floor has a recess, which is arranged such that the animal will not put her hind feet thereon, e.g. because its bottom extends obliquely inwardly and downwardly, so that the hind legs of the animal are wide apart and on either side of the recess. The recess may have a drain for discharging the animal's excrements, if any.

Once the animal has entered the milking parlour, a sensor device 4 is pivoted against her rear side. At the side of the milking parlour there is arranged a substantially vertical frame beam 5, which frame beam 5 at its upper end is provided with a longitudinal guide means and to which near its lower end a robot arm 6 is fitted. The vertical frame beam 5 is capable of moving with respect to the milking parlour in the longitudinal direction as denoted by the arrows 7. For that purpose, the railing is provided with a guide rod 8, along which can move two interconnected slide blocks 9, 10, the said slide blocks 9, 10 being interconnected by means of a horizontal frame beam 11 secured to the vertical frame beam 5. Near the floor, the frame beam 5 is guided by a guide rail 12, along which the lower portion of frame beam 5 slides.

The sensor device 4 is connected pivotably to a slide element 13 which by means of two slide blocks 14, 15 is arranged also slidably along the guide rod 8. Between two lugs 16, 17 there is arranged, rigidly connected to the slide element 13 and the slide block 10, respectively, a cylinder 18, while furthermore between the slide element 13 and a support 19 on the railing 2 there is arranged a cylinder 20. By operating the cylinder 20, the sensor device 4 can be moved towards the animal until, in the downward position, it bears against the animal's rear. In the present embodiment, the sensor device, and hence the animal's rear, determines the reference position, relative to which the position of the teats and that of the milking robot are determined. By moving the sensor device 4 towards the animal, it is also possible to move the frame beam 5, as a result of which the mutual positioning between the sensor device 4 and the frame beam 5 can be provided adjustably by means of the cylinder 18.

A robot arm 6 is connected slidably in height (arrows 21) to the frame beam 5. The sliding movement in height is effected by means of a cylinder 22, the one end of which is connected to the frame beams 5 and 11 in the place where the said frame beams are interconnected. The other end of the cylinder 22 is connected to a slide block 23 which is capable of moving in height along the frame beam 5 in dependence on the operation of the cylinder 22.

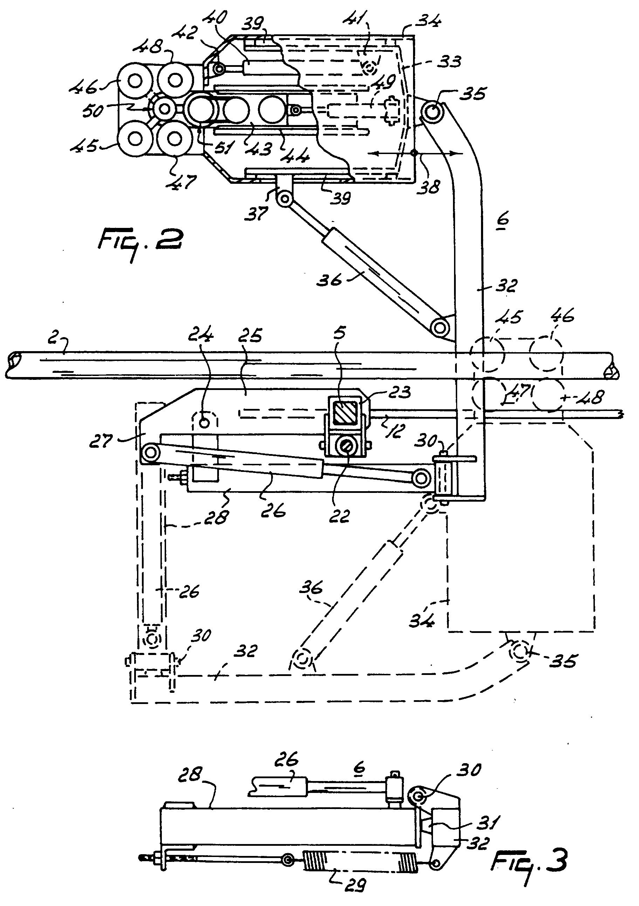

Figure 2 shows the robot arm 6 both in the rest position (interrupted lines) and in the operational position (uninterrupted lines). The robot arm 6 is connected capably of pivoting about a substantially vertical pivot pin 24 to the frame portion 25 which is attached to the slide block 23. This pivotal movement is effected by means of a cylinder 26 which has one end connected to a support 27 of the frame portion 25 and the other end to the first portion 26 of the robot arm 6. It will be obvious that, by operating the cylinder 26, the robot arm 6 can be pivoted from the rest position to the operational position and vice versa. It may be of importance for the robot arm, or a part thereof, to be fixed under spring load, i.e. in such a manner that it, or the said portion thereof, can deflect when e.g. the animal kicks against it. In this embodiment, this can be achieved by having the further portion of the robot arm 6 arranged capably of pivoting relative to the first portion thereof about a pin 30 against the action of an excess load spring 29. In the unloaded condition, the further portion of the robot arm 6 is pulled against the first portion 28 of the robot arm 6 by the intermediary of a rubber buffer 31 (see Figure 3).

The further portion of the robot arm 6 consists of a second portion 32, a third portion 33 and a fourth portion 34. The third portion 33 of the robot arm 6 is connected capably of pivoting about a pivot pin 35 to the said second portion 32. The pivotal movement about the pivot pin 35 is effected by means of a cylinder 36, the one end of which is connected to the second portion 32 of the robot arm 6 and the other end to a support 37 on the third portion 33 of the robot arm 6. As is apparent from Figure 2, by means of the cylinder 26, the robot arm can be moved to under the animal present in the milking parlour, the pivot pin 35 being approximately in a central position under the animal, i.e. between the animal's front and rear legs. Thereafter, by operating the cylinder 36, the third portion 33 of the robot arm 6 can be pivoted about the pivot pin 35 at a desired angle.

The fourth portion 34 of the robot arm 6 (i.e. the end thereof) is movable axially relative to the third portion 33, as is indicated by arrows 38. In this connection, the support 37 is movable in a slot-shaped aperture provided on the side of the fourth portion 34 of the robot arm 6.

In the inserted condition, the third portion 33 of the robot arm 6 is located partly within the end 34 of the robot arm 6. The end 34 of the robot arm 6 being slidable relative to the third portion 33, it is provided with rails 39. Between the mutually slidable portions 33 and 34 there is arranged a cylinder 40, the one end of which is connected via a support 41 to the third portion 33 of the robot arm 6 and the other end via a support 42 to the end 34 thereof.

The end 34 of the robot arm 6 can be adjusted in the longitudinal direction under the animal by means of both the cylinder 40 and the cylinder 18. Although in this connection it would be sufficient to use the cylinder 40, it will be possible, by the addition of the cylinder 18, to limit the stroke of the former considerably, which, in view of the restricted space under the animal, is highly advantageous.

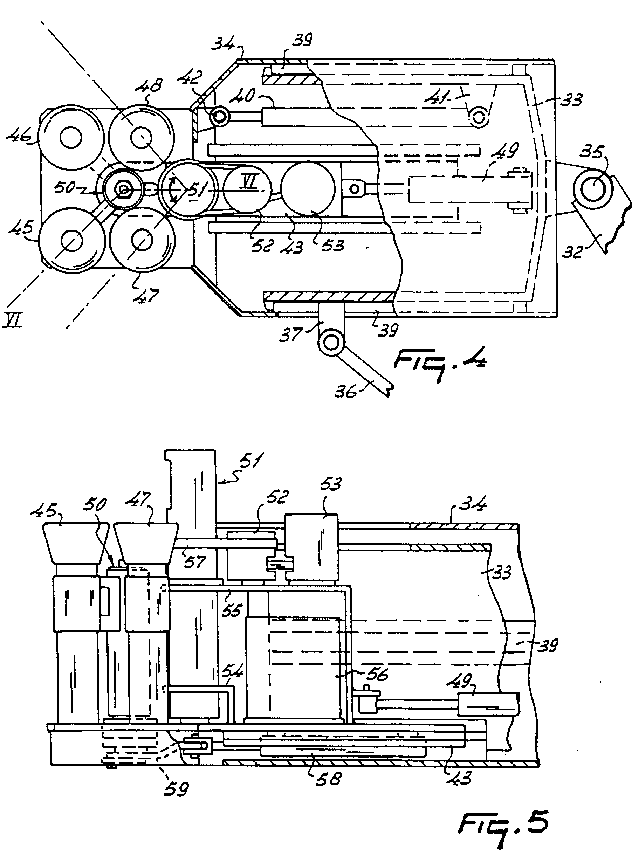

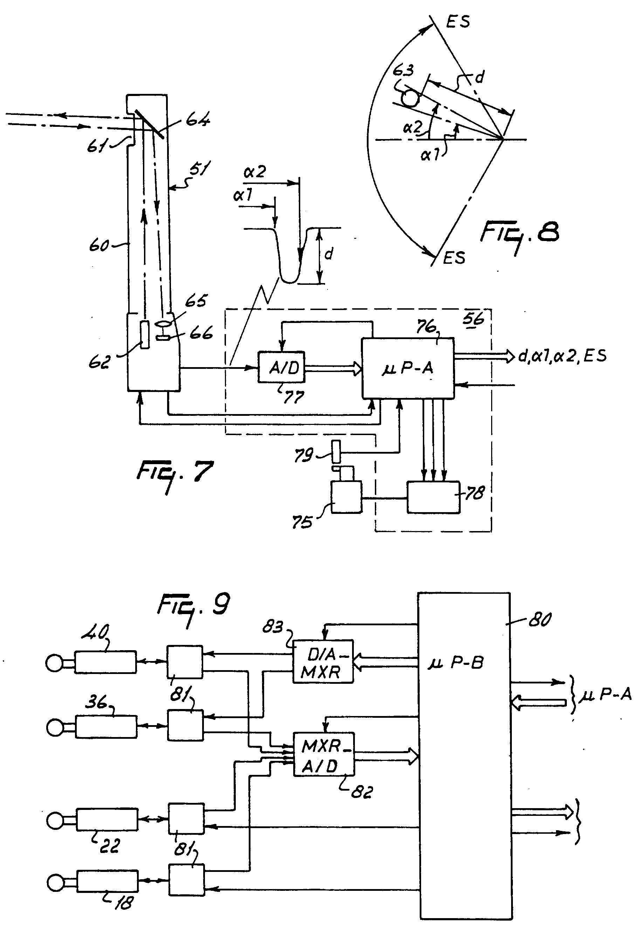

The end 34 of the robot arm 6 is provided with a slide 43 which by means of rails 44 is movable along the robot arm end 34 in the longitudinal direction. Teat cups 45, 46, 47 and 48 are provided at the end 34 of the robot arm 6, in which situation, since the robot arm 6 approaches the animal's udder from the front side, the teat cups 45 and 46 are intended for connection to the animal's rear teats and the teat cups 47 and 48 to the front teats. The teat cups 45 to 48 are arranged such that the slide 43 can move at least between the teats cups 47 and 48. The slide 43 is capable of reciprocating by means of a cylinder 49, one end of which is connected to the slide 43 and the other end to the end 34 of the robot arm 6. On the slide there are provided, taken from the left to the right in Figure 4: coupling means 50, sensor means 51, a pivotal mechanism 52 and a stepper motor 53, the last two units together constituting the pivotal means for the sensor means 51. In the embodiment shown in Figure 7, these pivotal means are constituted by a bi-directionally controlable stepper motor. The sensor means 51 are secured on the slide 43 by means of supporting plates 54 and 55 (see Figure 5). The pivotal means 52, 53 are arranged on the supporting plate 55. In addition, the slide 43 is provided, under the supporting plate 55, with the sensor electronics 56 required for the sensor means 51.

The sensor means 51 are mounted such that they are pivotal through a pivotal angle which extends symmetrically relative to the longitudinal direction of the robot arm end 34, which angle in the embodiment is approximately 120°. The sensor means 51 are reciprocated by the pivotal means 52, 53 through the pivotal angle in approximately 0.5 second. The stepper motor 53 drives the pivotal mechanism 52, while the pivotal mechanism 52 causes the sensor means 51 to reciprocate with the aid of a belt 57. In addition, under the slide 43 there is arranged a cylinder 58 with the aid of which, with the intermediary of a pivotal mechanism 59, the coupling means 50 can be reciprocated through a pivotal angle which also extends symmetrically relative to the longitudinal direction of the robot arm end 34, which angle in the embodiment is approximately 90°. After the robot arm end 34 has been positioned approximately below the animal's udder, the sensor means 51 can determine the position of the front teats, when the slide 43 has been adjusted to a first position; the position of the slide 43 is then also that wherein, during the coupling procedure, the coupling means 50 can engage the teat cups 47 and 48 in order to connect same to the front teats. When thereafter the slide 43 is moved forwards, it can arrive in a second position in which by means of the sensor means 51 the position of the rear teats can be determined and in which the coupling means 50 subsequently can engage the teat cups 45 and 46 in order to connect same to the rear teats. This situation is illustrated in Figures 3 to 5. In both the first (front) and the second (rear) position of the slide 43, the coupling means 50 can only engage the teat cups 47, 48, respectively 45, 46, individually. In both positions, the cylinder 58 and the pivotal mechanism 59 can first adjust the coupling means to a position wherein they can, for example, engage the respective teat cups 45 and 47 and thereafter to a position wherein they can engage the respective teat cups 46 and 48. The sensor means 51 continue to be permanently operative in order to detect the teat positions located within the pivotal angle, even during the subsequent upward movement of the teat cups 45 to 48.

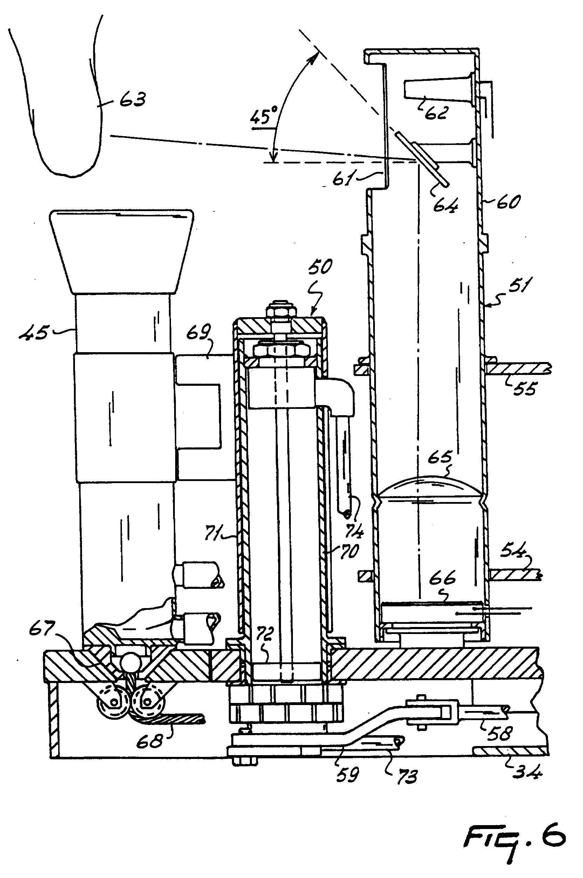

Figure 6 shows the sensor means 51 in further detail; they comprise a housing 60 constituted by a cylindrical sleeve and provided with a laser-transparant window 61 near its upper end. Behind the window 61 there is arranged a transmitter element 62 constituted by a laser, which transmitter element 62 is controlled from the sensor electronics 56. The use of a laser for the sensor means 51 has the advantage that hereby a much narrower scanning beam as well as a much higher data rate can be obtained. Therefore, the transmitter element 62 is capable of transmitting continuously a narrow scanning beam to determine the position of a teat 63. This teat 63 disperses and/or reflects the radiation transmitted by the transmitter element 62. Via the window 61, a fraction of the radiation returns into the housing 60 and is deflected downwardly by a reflecting element 64, constituted by a flat mirror and located behind the window 61, and is guided to a receiver element 66 including a diode detector via a converging lens 65 accommodated in the housing 60. The region on the receiver element 66 where the captured beam is focused to a greater or lesser extent, is decisive for the sensor means-teat distance. The signal applied by the receiver element 66 to the sensor electronics 56 is indicative of this focusing region. In the present embodiment, the beam transmitted by the transmitter element 62 extends substantially horizontally and the mirror is arranged at an angle of approximately 45°. The angular position of the teat 63 relative to the robot arm end 34 can further be determined from the time interval in which the reflections are received from the teat 63 during the reciprocating movement of the sensor means 51. From the detected position of a teat 63 with respect to the robot arm end 34 signals are generated by control means (to be described in further detail hereinafter) to adjust the robot arm end 34 to such a position that a relevant teat cup can be connected to the teat 63 by moving it upwardly.

As soon as the robot arm end 34 has arrived in the desired position, a relevant teat cup can be connected. In the present embodiment, the teat cups 45 to 48 bear on the robot arm end 34 in tapering recesses 67. The teat cups 45 to 48 are kept in position therein by flexible connecting members 68 which are coupled to cylinders (not shown) in the fourth part 34 of the robot arm 6. The teat cups 45 to 48 can then be moved freely upwardly and are pulled down again by the said cylinders in their positions in the tapering recesses 67 when the supply of milk stops. The upward movement of the individual teat cups is effected by the coupling means 50 which are provided with an electromagnet 69 which, after having been energized, can engage the teat cup to which the electromagnet 69 is directed at that instant. By rotation of the coupling means 50 and by a change in the position of the slide 43, the electromagnet 69 can be directed to the other teat cups which can then be engaged after energizing of the electromagnet 69. The coupling means 50 include a vertical inner jacket 70 which is connected rigidly to the slide in the upward direction; this inner jacket 70 can be rotated by the pivotal mechanism 59 through the said pivotal angle of, in this embodiment, 90°. The inner jacket 70 is surrounded by an outer jacket 71 which can move only in upward and downward direction. The electromagnet 69 is connected rigidly to this outer jacket 71. The outer jacket 71 is connected rigidly to a piston 72 which extends through the coupling means 50. Compressed air can be applied in the space under the piston 72 via a compressed air supply pipe 73, whereby the outer jacket 71 and the electromagnet 69 connected thereto and the teat cup engaged thereby are moved upwardly. The pressure exerted by the compressed air is such that, as soon as the teat cup contacts the cow's udder and, therefore, a certain counter-pressure is exerted, the upward movement of the teat cup is stopped. When a teat cup has been connected to the relevant teat 63, the electromagnet 69 is de-energized and, consequently, the teat cup is no longer retained thereby. Subsequently, compressed air can be passed into the space above the piston 72 via the compressed air supply pipe 74, as a result of which the outer jacket 71 with the electromagnet 69 connected thereto can be moved downwardly; in this connection, the pressure on the supply pipe 73 must, of course, be less than that on the supply pipe 74,

Figure 7 shows a second arrangement of a laser with the associated sensor electrons 56. In this case, both the laser 62 and the diode detector 66 with associated electronics are arranged in the lower part of the housing 60. For the pivotal movement of the sensor means 51, the pivotal means are constituted here by a bi-directionally controllable stepper motor 75. The sensor electronics 56 is constituted here by a microprocessor 76, an analog-digital converter 77 and a control circuit 78. The laser 62 is activated from the microprocessor 76. When, during its pivotal movement, the laser moves across an object, such as the teat of an animal's udder, then by the diode 66 there is supplied a signal which is determined by three parameters: the distance d from the sensor means 51 to the object, and the angles α₁ and α₂ which indicate the initial angle and the final angle, respectively, of the laser beam moving across the object; these parameters are shown in Figure 8. The distance d determines the focusing position of the reflected/dispersed laser beam on the diode detector, while the position on the diode detector determines the amplitude of the signal supplied thereby (Figure 7). The angles α₁ and α₂ are determined by the position of the sensor means 51 at the moment when, during its pivotal movement, the laser beam establishes the "beginning" and the "end" of the object; since a pivotal movement, and hence the beginning of a next one, is signalled each time by a signal ES (End Scan), the angles α₁ and α₂ can de determined by establishing each time the score of the counter, wherein is counted the number of steps made by the stepper motor 75 until the occurrence of the edges of the signal from the diode detector. The magnitude of d, α₁ and α₂ is determined in the microprocessor 76; for that purpose, the signal from the diode detector 66 is supplied via the analog-digital converter 77 to the microprocessor 76; with the aid of the latter, the sample frequency of the analog-digital converter 77 is set. In addition, from the diode detector 66 there is supplied to the microprocessor 76 directly a signal indicating that the signal supplied via the analog-digital converter 77 should not be considered a valid one; this signal has a threshold function. The stepper motor 75 is controlled from the microprocessor 76. In this connection, use is made of a control circuit 78, to which are supplied from the microprocessor 76 the following signals: an on/off-signal, a signal for determining the rotational direction of the stepper motor 75, and a series of pulse-shaped signals, of which the number per unit of time determines the rotational speed of the stepper motor 75. The stepper motor 75 includes an inductive recording element 79 for establishing a reference position thereof. When the stepper motor 75 passes this reference position, a signal is supplied by the inductive recording element 79 to the microprocessor 76; this signal is of importance in determining the correct moment at which the various signals are supplied to the control circuit 78.

The microprocessor 76 is activated by a second microprocessor 80 (see Figure 9); to this second microprocessor 80 are supplied the values d, α₁ and α₂, as well as the signal ES permanently on interrupt-basis. Each time when on interrupt-basis the data d, α₁ and α₂ and ES are supplied to the second microprocessor 80, the latter sees to it that the position of the cylinder is established. In the second microprocessor 80 are realized the "searching procedure" for roughly determining the position of the teats of the animal's udder relative to a reference position, the "tracking procedure" for accurately determining the position of the teats of the animal's udder relative to a reference position, the control movement by the end of the robot arm to this accurately tracked position, and the connecting of the teat cups. "Roughly determined" does not imply that an inaccurate measurement is made, but that the measurement registers an instantaneous indication; for the teat will be moving continuously.

In determining the position of the teats of the animal's udder, the position of the cylinders 18, 22, 36 and 40 is of importance. Each of these cylinders is provided in a known per se manner with control electronics 81. In roughly adjusting the end 34 of the robot arm 6 in the centre below the animal, the cylinders 18 and 22 are utilized. The adjustment in the longitudinal direction is determined roughly by means of the cylinder 18, while by means of the cylinder 22 is determined roughly the height. The cylinder 22 is also utilized for a searching movement performed by the sensor means 51. In accurately determining and tracking, the cylinders 36 and 40 are utilized. At any moment determined by the microprocessor 80, the actual position of the cylinders 18, 22, 36 and 40 can be supplied via the multiplexer/analog-digital converter 82 to the microprocessor 80 and be registered in memory means thereof. Conversely, at any moment determined by the microprocessor 80, the desired position of the cylinders 36 and 40 can be supplied via the converter/multiplexer 83 to these cylinders 36 and 40. With respect to the cylinders 18 and 22, it will suffice to supply from the microprocessor 80 only two signals to the relevant control electronics 81; by means of these signals can be indicated whether the cylinders 18 and/or 22 have to be activated or stopped, and in what direction the cylinders have to control the end 34 of the robot arm 6. Besides in roughly adjusting the end 34 of the robot arm 6, the cylinder 22 is also utilized in moving the laser in the vertical direction, and hence the end 34 of the robot arm 6 during the "searching procedure" to be described hereinafter. Although this is not of importance here, the further operating units, too, are controlled by the microprocessor 80. The cylinders 18, 20, 22, 26, 36, 40, 49 and 58 can be operable either hydraulically, pneumatically or electromagnetically. Insofar as hydraulically or electromagnetically operable cylinders are utilized, it is strongly desirable to include an additional overload protection against kicks from the animal. In a preferred embodiment, the cylinders 18 and 22 which are relevant to the determination of the position of the teats are electromagnetically operable, while the cylinders 36 and 40 are pneumatically operable, in which connection the control electronics 81 are designed such that these cylinders can reach very quickly a specific position determined by the microprocessor. Servo-pneumatic positioning elements, constituted by a pneumatic cylinder with associated control electronics, are known per se, but in the present implement, in co-operation with a laser in the sensor means, they render it possible for the teat cups to be connected to the teats in an extremely fast and efficient manner.

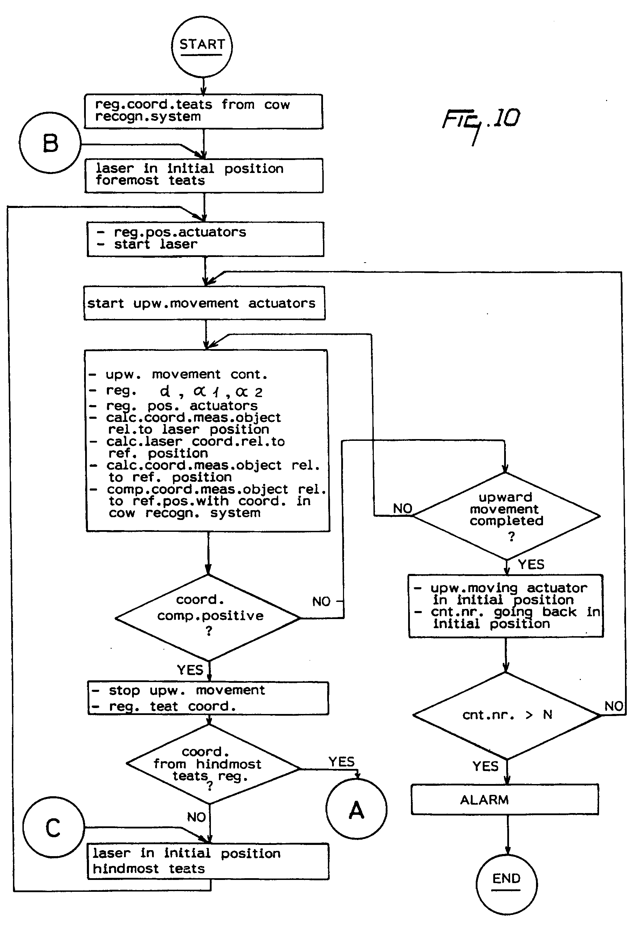

The "searching procedure" as registered in the microprocessor 80 will be set out with reference to the flow diagram of Figure 9, while the "tracking procedure" will be set out with reference to the flow diagram of Figure 10.

When the animal arrives in the milking parlour, she will be identified by means of a conventional animal recognition data source. The animal recognition is of importance to the present invention to the extent that thereby is known for each animal the position of the teats of the animal's udder relative to a fixed point on the animal, while, furthermore, this position in the animal recognition data source can be corrected, if necessary, on the basis of the continuously occurring "searching and tracking procedure". For the searching procedure to be described hereinafter it is of importance that is registered the position of the teats relative to a reference position, here a point on the animal's rear centre as determined by the sensor device 4. First of all, the end of the robot arm is brought into such a starting position that the laser, i.e. the point in the aperture of the housing wherein the laser is accommodated and from where the horizontal laser scan movement takes place, is located at a predetermined slight distance below and in the middle in front of the front teats, e.g. 50 mms below the front teats and 120 mms in the middle in front thereof, The then actual position of the cylinders is registered and the laser is started. Then, the cylinder 22 is activated, after which the robot arm end with the laser is moved upwardly, during which movement the laser performs its scanning movement, each scanning movement taking e.g. 0.25 second. During this upward movement, the values d, α₁ and α₂ for the two front teats are registered permanently, as well as the associated position of the cylinder 22. From the values d, α₁ and α₂ is calculated the position, relative to that of the laser, of the objects observed, which are not yet considered as teats. From the position of the cylinders is calculated the position of the laser relative to the reference position. On the basis of the results of the two last calculations is calculated the position of the objects observed relative to the reference position. Subsequently, this last position is compared with the data regarding this position as derived from the animal recognition data source. Should there be established an agreement within certain limits, then the objects observed are identified as the animal's front teats, this position of the front teats is registered and the upward movement of the cylinder 22 is stopped. Subsequently, the laser is positioned in the starting position below and in the middle in front of the rear teats and the above-described procedure is repeated, after which also the position of the rear teats is registered. This completes the "searching procedure". In case, during the searching procedure, no agreement within certain limits is established between the calculated position of the objects observed and the relevant data from the animal recognition data source, then the searching is continued. Then, the laser is moved higher upwardly and, after having reached its highest position of e.g. 100 mms above its starting position, returns to this starting position in order to perform another searching movement in the vertical direction. When after a number of searching movements still no teats have been identified, an alarm is operated.

After the searching procedure follows the tracking procedure, in which the teats are tracked individually in order to be able to connect a teat cup thereto. In this tracking procedure, the teats are numbered, so that a fixed order can be observed. First, one of the rear teats is tracked; the laser is already in the right starting position therefor, i.e. the position wherein the cylinder 22 has stopped during the search for the rear teats. Here again, the data flow of the laser, i.e. the values d, α₁ and α₂ as well as the position of the relevant cylinders, is registered permanently. From the values d, α₁ and α₂ is calculated continuously the position of the teat relative to the laser and therefrom the difference between the position of the teat relative to the laser and the position of the relevant teat cup relative to the laser; in the present embodiment, these differences Δr, Δφ are determined in polar coordinates. When these differences are not slight enough, i.e. the teat cup is located not quite below the relevant teat, then the results of the last measurement are compared with the feat position corrected on the basis of the previous measurement; in the present embodiment, the magnitude of these differences is keyed in Cartesian coordinates, When these differences Δx, Δy are less than a certain value of e.g. 35 mms, then the cylinders have to be activated and the relevant teat cup, i.e. the end of the robot arm, has to be dispatched to the lastly determined teat position. This procedure is repeated until the difference between the position of the teat relative to the laser and that of the teat cup relative to the laser is slight enough, so that the teat cup is located almost straight below the relevant teat. The teat cup is then moved upwardly and connected, while by means of a vacuum under the teat it is checked whether the teat cup is connected correctly. During this upward movement of the teat cup, the tracking procedure remains active, so that even then the teat cup can be controlled yet. A vacuum may also occur when the teat cup is not connected correctly, in particular when the teat is folded and the teat cup is pressed thereagainst. Therefore, the check whether the teat cup is connected correctly can be made by means of a temperature measurement; for in the milk flow there is measured a higher temperature than thereoutside.

From the finally registered position of the teat cup at the moment of connection and the mutual position of the teats, as can be obtained from the teat position determination in the searching procedure, there can be obtained a corrected initial position of the laser for the tracking of the second rear teat. After the laser has been brought in this corrected initial position, the above-described tracking procedure is repeated and the second teat cup can be connected. Likewise, the third and fourth teat cups are connected, after which the tracking procedure is completed. When during the tracking procedure it is established that the differences Δx, Δy are too great, i.e. in the present embodiment more than 35 mms, then the relevant cylinders are not activated, the control of the teat cup is omitted and the tracking procedure is repeated. When this has been done for a number of times and the differences Δx, Δy continue to be too great, then the searching procedure is returned to, i.e. to the point where the search for the front teats or the rear teats is initiated.

It should be noted that, alternatively, two transmitter elements constituted by lasers can be used instead of one transmitter element.

## Claims

1. An implement for automatically milking animals, such as cows, comprising a milking robot with a robot arm (6), a carrying element formed by said robot arm (6) and being able to carry teat cups (45 to 48) to be connected to the teats of an animal, coupling means (50) being arranged on said robot arm (6), said coupling means including a single teat cup engagement member (69) adapted to engage each of said teat cups individually, whereby the coupling means is adapted to engage and move said teat cups (45 to 48) upwardly one after another relative to the robot arm (6), characterized in that the carrying element is adapted to accommodate all the teat cups (45 to 48) simultaneously in the immediate vicinity of the coupling means (50).

2. An implement as claimed in claim 1, characterized in that the coupling means (50) include an electromagnet (69) and a teat cup is engaged by energizing the electromagnet.

3. An implement as claimed in claim 2, characterized in that the electromagnet (69) remains energized until a vacuum in the relevant teat cup is established, said vacuum establishment being an indication that the teat cup is connected to the relevant teat.

4. An implement as claimed in claim 1, 2 or 3, characterized in that the teat cups (45 to 48) are kept in position on the robot arm (6) by flexible connecting members (68) coupled to cylinders, each of which permits a relevant teat cup to be moved upwardly after being engaged by the coupling means (50) and pulls down said teat cup after the milk supply in said 25 teat cup has been stopped.

5. An implement as claimed in claim 4, characterized in that the coupling means (50) include an outer jacket (71) to which the electromagnet (69) is fitted, as well as a substantially vertical inner jacket (70) which is connected to the robot arm (6), whereby it is possible for the outer jacket (71) with the electromagnet (69) to be moved in the upward direction.

6. An implement as claimed in any one of the preceding claims, characterized in that pivotal means (58, 59) are provided on the robot arm (6), and in that with the aid of said pivotal means (58, 59) the coupling means (50) can be brought into angular positions wherein the teat cups (45 to 48) can be engaged.

7. An implement as claimed in claim 6, characterized in that the pivotal means (58, 59) are constituted by a pivotal mechanism (59) provided on the lower part of the coupling means (50) and a cylinder (58) connected between the pivotal mechanism (59) and the robot arm (6) to control the pivotal mechanism (59).

8. An implement as claimed in any one of the preceding claims, characterized in that the coupling means (50) are arranged on a member (43), movably relative to the robot arm (6), in order to bring the coupling means (50) in two possible positions relative to the teat cups (45 to 48) carried on the robot arm (6), so that in each position the coupling means (50) can be brought into two angular positions wherein respective teat cups can be engaged.

9. An implement as claimed in claim 8, characterized in that the movable member (43) can be adjusted to a first position in which the coupling means (50) can engage the respective teat cups (47, 48) to be connected to the rear teats in angular positions determined by the pivotal means (58, 59) and to a second position in which the coupling means (50) can engage the respective teat cups (45, 46) to be connected to the front teats in the said angular positions.

10. An implement as claimed in claim 8 or 9, characterized in that the coupling means (50) can be moved reciprocally through a pivotal angle of approximately 90°.

## Patentansprüche

1. Vorrichtung zum automatischen Melken von Tieren, wie z. B. Kühen, die einen Melkroboter mit einem Roboterarm (6) aufweist, der ein Tragelement zum Tragen von an die Zitzen eines Tieres anzuschließenden Zitzenbechern (45 bis 48) bildet, wobei an dem Roboterarm (6) eine Kupplungsvorrichtung (50) vorgesehen ist, wobei die Kupplungsvorrichtung ein Element (69) zum Ergreifen eines einzelnen Zitzenbechers aufweist, das geeignet ist, jeden Zitzenbecher einzeln zu ergreifen, wobei die Kupplungsvorrichtung geeignet ist, die Zitzenbecher (45 bis 48) nacheinander zu ergreifen und relativ zu dem Roboterarm (6) nach oben zu bewegen,
dadurch gekennzeichnet, daß das Tragelement derart ausgebildet ist, daß alle Zitzenbecher (45 bis 48) zugleich in unmittelbarer Nähe der Kupplungsvorrichtung (50) von ihm aufzunehmen sind.

2. Vorrichtung nach Anspruch 1,
dadurch gekennzeichnet, daß die Kupplungsvorrichtung (50) einen Elektromagneten (69) aufweist, und daß ein Zitzenbecher durch Erregen des Elektromagneten ergriffen wird.

3. Vorrichtung nach Anspruch 2,
dadurch gekennzeichnet, daß der Elektromagnet (69) erregt bleibt, bis in dem zugehörigen Zitzenbecher ein Vakuum erzeugt ist, wobei das Bestehen des Vakuums eine Anzeige dafür ist, daß der Zitzenbecher an die zugehörige Zitze angeschlossen ist.

4. Vorrichtung nach Anspruch 1, 2 oder 3,
dadurch gekennzeichnet, daß die Zitzenbecher (45 bis 48) in ihrer Position an dem Roboterarm (6) durch flexible Verbindungselemente (68) gehalten werden, die mit Zylindern verbunden sind, die jeweils eine Aufwärtsbewegung eines zugehörigen Zitzenbechers ermöglichen, nachdem dieser von der Kupplungsvorrichtung (50) ergriffen worden ist, und die den Zitzenbecher nach unten ziehen, nachdem der Milchfluß in dem Zitzenbecher versiegt ist.

5. Vorrichtung nach Anspruch 4,
dadurch gekennzeichnet, daß die Kupplungsvorrichtung (50) ein Außenrohr (71) aufweist, an dem der Elektromagnet (69) angeordnet ist, sowie ein im wesentlichen vertikales Innenrohr (70), das mit dem Roboterarm (6) verbunden ist, wobei das Außenrohr (71) mit dem Elektromagneten (69) nach oben zu bewegen ist.

6. Vorrichtung nach einem der vorhergehenden Ansprüche,
dadurch gekennzeichnet, daß an dem Roboterarm (6) eine Schwenkeinrichtung (58, 59) vorgesehen ist, und daß mittels der Schwenkeinrichtung (58, 59) die Kupplungsvorrichtung (50) in Winkelpositionen zu bewegen ist, in denen die Zitzenbecher (45 bis 48) zu ergreifen sind.

7. Vorrichtung nach Anspruch 6,
dadurch gekennzeichnet, daß die Schwenkeinrichtung (58, 59) durch eine an dem unteren Teil der Kupplungsvorrichtung (50) vorgesehene Schwenkmechanik (59) und einen Zylinder (58) gebildet ist, der zwischen der Schwenkmechanik (59) und dem Roboterarm (6) angeordnet ist, um die Schwenkmechanik (59) zu steuern.

8. Vorrichtung nach einem der vorhergehenden Ansprüche,
dadurch gekennzeichnet, daß die Kupplungsvorrichtung (50) an einem Stellglied (43) angeordnet ist, das relativ zu dem Roboterarm (6) bewegbar ist, um die Kupplungsvorrichtung (50) relativ zu den von dem Roboterarm (6) getragenen Zitzenbechern (45 bis 48) in zwei Positionen einzustellen, so daß die Kupplungsvorrichtung (50) in jeder Position in zwei Winkelpositionen zu bewegen ist, in denen zugehörige Zitzenbecher zu ergreifen sind.

9. Vorrichtung nach Anspruch 8,
dadurch gekennzeichnet, daß das Stellglied (43) in eine erste Position einstellbar ist, in der die Kupplungsvorrichtung (50) diejenigen Zitzenbecher (47, 48) ergreifen kann, die an den hinteren Zitzen in Winkelpositionen anzubringen sind, welche durch die Schwenkeinrichtung (58, 59) bestimmt sind, und daß das Stellglied (43) in eine zweite Position einstellbar ist, in der die Kupplungsvorrichtung (50) diejenigen Zitzenbecher (45, 46) ergreifen kann, die in den genannten Winkelpositionen an den vorderen Zitzen anzubringen sind.

10. Vorrichtung nach Anspruch 8 oder 9,
dadurch gekennzeichnet, daß die Kupplungsvorrichtung (50) um einen Schwenkwinkel von etwa 90° hin und zurück zu bewegen ist.

## Revendications

1. Machine pour traire automatiquement des animaux, tels que des vaches, comprenant un robot trayeur avec un bras de robot (6), un élément porteur formé par ledit bras de robot (6) et capable de porter des godets de trayons (45 à 48) destinés à être appliqués aux trayons d'un animal, des moyens de couplage (50) étant disposés sur ledit bras de robot (6), lesdits moyens de couplage comprenant un seul organe de saisie de godet de trayon (69) adapté pour saisir individuellement chacun desdits godets de trayons, les moyens de couplage étant adaptés pour saisir et entraîner vers le haut lesdits godets de trayon (45 à 48), l'un après l'autre, par rapport au bras de robot (6), **caractérisée** en ce que l'élément porteur est adapté pour loger tous les godets de trayons (45 à 48) simultanément au voisinage immédiat des moyens de couplage (50).

2. Machine selon la revendication 1, caractérisée en ce que les moyens de couplage (50) comportent un électro-aimant (69) et en ce qu'un godet de trayon est saisi par actionnement de l'électro-aimant.

3. Machine selon la revendication 1, caractérisée en ce que l'électro-aimant (69) reste activé jusqu'à ce qu'un vide soit établi dans le godet de trayon concerné, cet établissement du vide étant une indication que le godet de trayon est relié au trayon approprié.

4. Machine selon la revendication 1, 2 ou 3, caractérisé en ce que les godets de trayons (45 à 48) sont maintenus en position sur le bras de robot (6) par des organes flexibles de liaison (68) reliés à des vérins, chacun desquels permet à un godet de trayon approprié d'être entraîné vers le haut après avoir été saisi par les moyens de couplage (50), et tire ledit godet de trayon vers le bas après que le débit de lait dans ledit godet de trayon a été arrêté.

5. Machine selon la revendication 4, caractérisée en ce que les moyens de couplage (50) comportent une enveloppe extérieure (71) sur laquelle est monté l'électro-aimant, ainsi qu'une enveloppe intérieure (70) sensiblement verticale qui est reliée au bras de robot (6), ce qui permet d'entraîner vers le haut l'enveloppe extérieure (71) avec l'électro-aimant.

6. Machine selon l'une quelconque des revendications précédentes, caractérisée en ce que des moyens de pivotement (58, 59) sont prévus sur le bras de robot (6), et en ce qu'à l'aide desdits moyens de pivotement (58, 59), les moyens de couplage (50) peuvent être amenés en des positions angulaires dans lesquelles les godets de trayons (45 à 48) peuvent être saisis.

7. Machine selon la revendication 6, caractérisée en ce que les moyens de pivotement (58, 59) sont constitués par un mécanisme de pivotement (59) prévu sur la partie inférieure des moyens de couplage (50) et par un vérin (58) relié entre le mécanisme de pivotement (59) et le bras de robot (6) pour commander le mécanisme de pivotement (59).

8. Machine selon l'une quelconque des revendications précédentes, caractérisée en ce que les moyens de couplage (50) sont disposés sur un organe (43) mobile par rapport au bras de robot (6) afin d'amener les moyens de couplage (50) en deux positions possibles par rapport aux godets de trayons (45 à 48) portés sur le bras de robot (6), de telle sorte qu'en chaque position les moyens de couplage (50) peuvent être amenés en deux positions angulaires dans lesquelles les godets de trayons respectifs peuvent être saisis.

9. Machine selon la revendication 8, caractérisée en ce que l'organe mobile (43) peut être ajusté sur une première position dans laquelle les moyens de couplage (50) peuvent saisir les godets de trayons respectifs (47, 48) destinés à être appliqués aux trayons postérieurs en des positions angulaires déterminées par les moyens de pivotement (58, 59), et sur une deuxième position dans laquelle les moyens de couplage (50) peuvent saisir les godets de trayons respectifs (45, 46) destinés à être appliqués aux trayons antérieurs dans lesdites positions angulaires.

10. Machine selon la revendication 8 ou 9, caractérisée en ce que les moyens de couplage (50) peuvent être entraînés, dans un sens comme dans l'autre, dans toute l'étendue d'un angle de pivotement d'approximativement 90°.
